# EUROPEAN PATENT SPECIFICATION

(11) **EP 2 301 227 B1**
(45) Date of publication and mention of the grant of the patent: **04.06.2014**
(21) Application number: 09789669.0
(22) Date of filing: 12.05.2009
(51) Int. Cl.: H04M 1/02, H04M 19/04

(54) **COMMUNICATION DEVICE WITH ORIENTATION INDICATION OF RECEIPT OF COMMUNICATION SIGNAL**
KOMMUNIKATIONSGERÄT MIT AUSRICHTUNGSANZEIGE BEI EMPFANG EINES KOMMUNIKATIONSSIGNALS
DISPOSITIF DE COMMUNICATION AVEC UNE INDICATION D'ORIENTATION DE RÉCEPTION DE SIGNAL DE COMMUNICATION

(30) Priority: 14.07.2008 US 172716
(43) Date of publication of application: 30.03.2011
(73) Proprietor: Sony Ericsson Mobile Communications AB, 221 88 Lund (SE)
(72) Inventor: INA, Peter, Joseph, Cary NC 27519 (US); CAMP, William, O., Jr., Chapel Hill NC 27514 (US); WAKEFIELD, Ivan, Nelson, Cary NC 27513 (US); HEUMAN, Patrik, N.G., Cary, NC 27519 (US); SPALINK, Karin, Johanne, Durham NC 27705 (US)
(74) Representative: Valea AB
(86) International application number: PCT/US2009/043587
(87) International publication number: WO 2010/008665

(56) References cited:
- EP-A2- 0 999 530
- EP-A2- 1 422 913
- EP-A2- 1 855 170
- WO-A1-2007/065483
- NL-C2- 1 024 042

## Description

### TECHNICAL FIELD

The present disclosure relates to communication devices and, more particularly, indicia of a receipt of a communication signal by the communication device.

### BACKGROUND

Many different varieties of communication devices are available on the market today. For many years the typical means of sending communication signals between individuals was performed through the use of standard telephones sending communication signals via a public switch telephone network. When an caller wanted to communicate with another individual, the caller would dial the phone number of the other individual, and the telephone network would either manually or automatically attempt to establish a connection with a phone of the other individual by sending a signal thereto, which would result in the other individual's phone ringing.

In recent years, a variety of different forms of communication are available to consumers, and a wide variety of devices are offered to provide such communication. Not only can individuals communicate using a standard wired telephone, but they can also communicate wirelessly using cellphone technology or other wireless technologies, and they can communicate via the internet using voice over internet protocol technology or other similar technologies. Additionally, consumers have the ability to communicate using short or multimedia messaging, electronic mail, audio-video conferencing, pagers, two-way radio transceivers, voicemail messaging systems, etc. using a wide variety of different devices.

Despite such advances in the variety of communication devices and methods, only limited changes have been made to the manner in which the call receiving device indicates that a signal is being received. Telephone devices still typically utilize ringtones or chimes to indicate that a signal is being received by the telephone. However, due to the portability of cellphones and the typical carrying of such devices in relative contact with the user's body, vibration devices have been used in place of ringtones, which can be beneficial in environments where the noise of the ringtone is not desired (e.g., in a movie theater, restaurant, etc.). However, such vibration devices do not provide an adequate indicator when the communication device is not on the user's body.

EP 0 999 530 discloses a portable radiotelephone comprising a visual alerting means.

Therefore, the need exists for an improved ability to alert users to incoming signals.

### DISCLOSURE

The above described needs are fulfilled, at least in part, by changing an orientation of a housing of the communication device to alert a user to receipt of a communication signal. Such an alert can be particularly advantageous in environments where the communication device is supported by a surface and where a quiet environment is desired. Also, such a device can provide entertainment value to a user when used alone or in combination with other indicators.

An embodiment of a communication device can, for example, advantageously include a housing, a signal receiver configured to receive a signal from another communication device, and a motive device provided within the housing. The motive device being configured to change an orientation of the housing in response to the receipt of the signal.

A further embodiment of a method of processing receipt of a signal at a communication device can, for example, advantageously include changing an orientation of a housing of the communication device in response to the receipt of the signal using a motive device housed within the housing.

Additional advantages of the present invention will become readily apparent to those skilled in this art from the following detailed description, wherein preferred embodiments of the invention is shown and described, simply by way of illustration of the best mode contemplated of carrying out the invention. As will be realized, the invention is capable of other and different embodiments, and its several details are capable of modifications in various obvious respects, all without departing from the invention. Accordingly, the drawings and description are to be regarded as illustrative in nature, and not as restrictive.

### BRIEF DESCRIPTION OF THE DRAWINGS

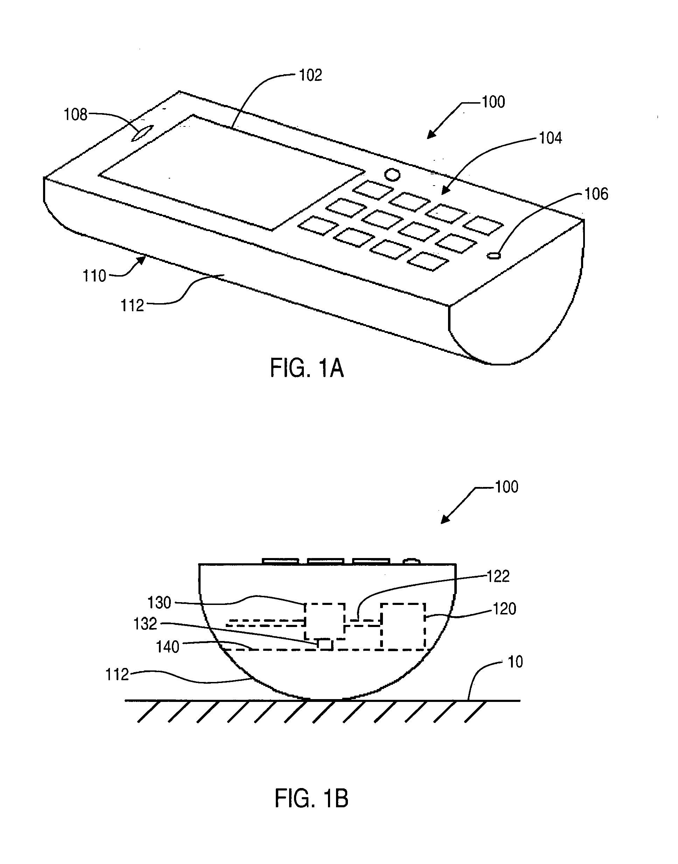

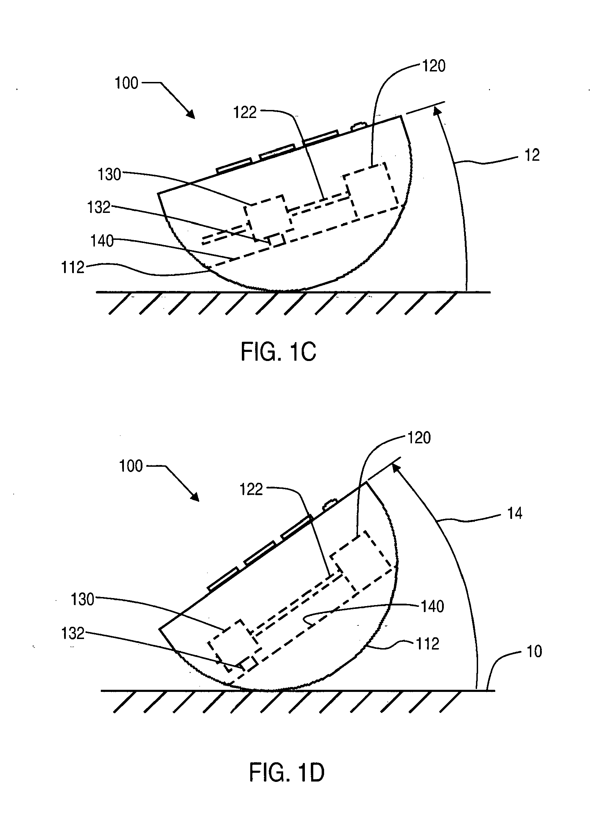

FIG. 1A is a perspective view of an embodiment of a communication device that is configured to perform orientation indicators upon occurrence of a signal receipt event, FIG. 1B is a transverse, cross-sectional view of the communication device of FIG. 1A shown in a rest position/orientation, FIG. 1C is a transverse, cross-sectional view of the communication device of FIG. 1A shown in a second position/orientation, and FIG. 1D is a transverse, cross-sectional view of the communication device of FIG. 1A shown in a third position/orientation.

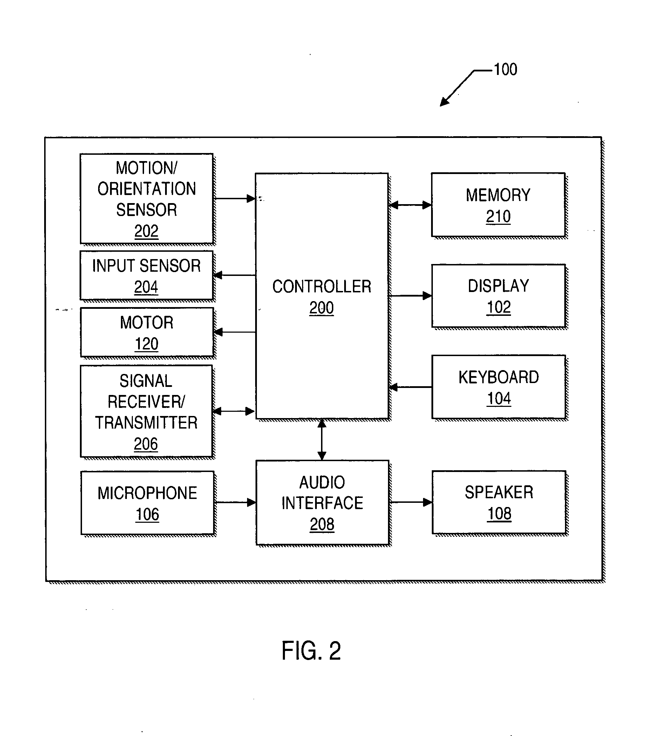

FIG. 2 is a block diagram of communication device components used for implementing the embodiment of the communication device illustrated in FIGS. 1A-1D.

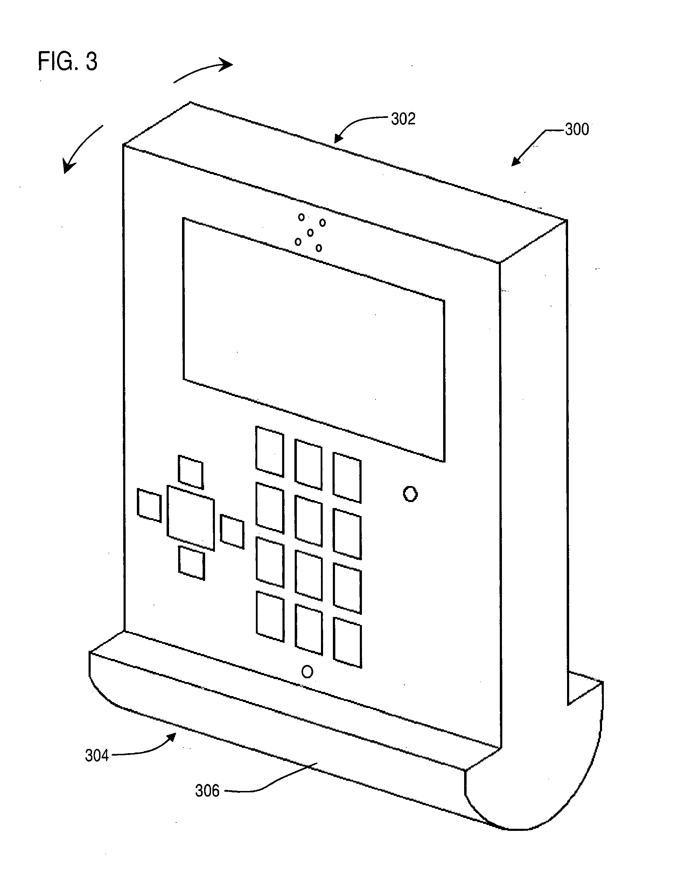

FIG. 3 is a perspective view of an additional embodiment of a communication device that is configured to perform orientation indicators upon occurrence of a signal receipt event.

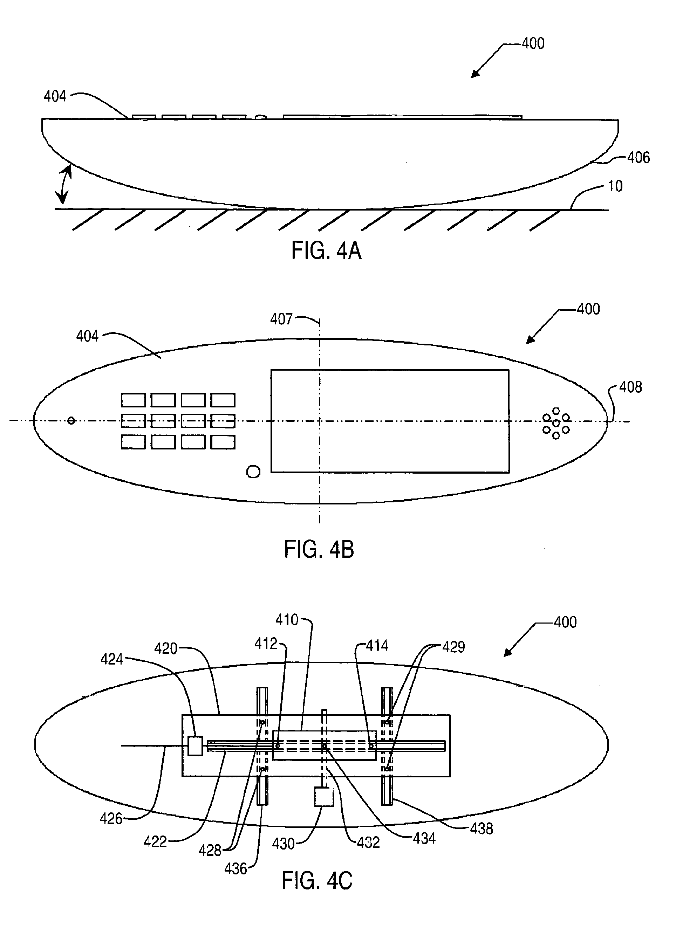

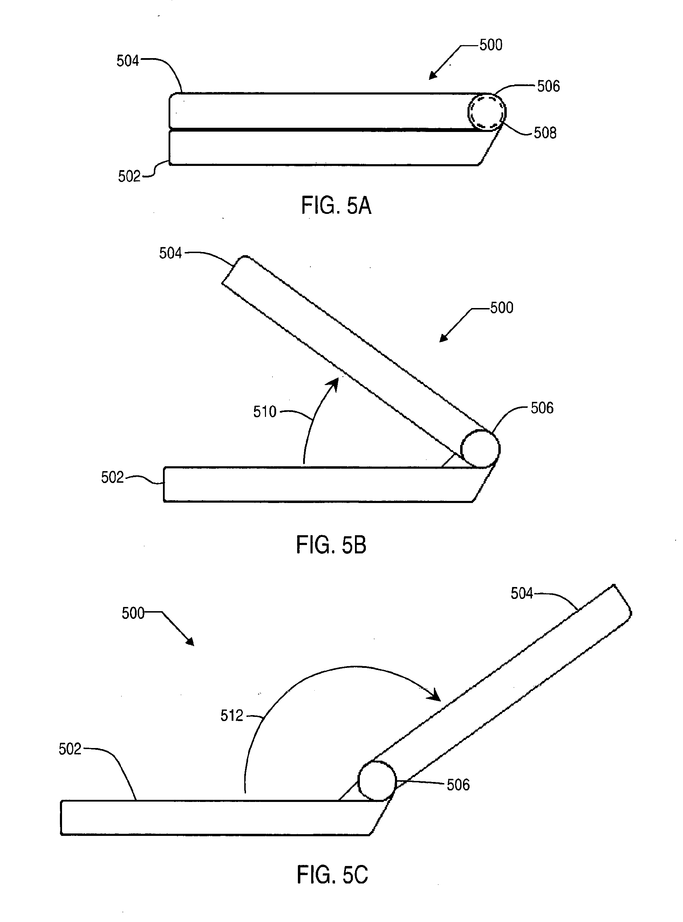

FIG. 4A is a front elevational view of a further embodiment of a communication device that is configured to perform orientation indicators upon occurrence of a signal receipt event, FIG. 4B is a top, plan view of the communication device of FIG. 4A, and FIG. 5C is a top, plan view of the communication device of FIG. 4A shown with an upper face remove to show inner components of the communication device.
FIG. 5A is a front elevational view of another embodiment of a communication device that is configured to perform orientation indicators upon occurrence of a signal receipt event shown in a rest position/orientation, FIG. 5B is a front elevational view of the communication device of FIG. 5A shown in a second position/orientation, and FIG. 5C is a front elevational view of the communication device of FIG. 5A shown in a third position/orientation.

### DETAILED DESCRIPTION

Embodiments of the present invention will be described hereinafter with reference to the accompanying drawings. In the following description, the constituent elements having substantially the same function and arrangement are denoted by the same reference numerals, and repetitive descriptions will be made only when necessary.

FIG. 1A depicts an embodiment of a communication device 100. While the embodiment depicted is configured as a wireless telephone, the communication device of the invention can be configured as any variety of communication device (e.g., wireless or wired public switched telephone network device, a voice over internet protocol device, any variety of wireless communication devices such as a cellphone, personal digital assistant, pager, two-way radio transceiver, etc. capable of receiving voice and/or video communication signals, text messaging signals, email messages, calendar event reminders, and/or other communication signals).

The communication device 100 depicted in FIG. 1A includes a display 102, a keypad or keyboard 104, a microphone 106, and a speaker 108. The display 102 can be configured as a touchscreen device that can be used to input various commands, as well as displaying information. The keyboard 104 can include any number and variety of user input devices, such as buttons used to enter numbers, letters, or other input commands.

The communication device 100 includes a housing 110 that includes a support surface 112, which in this embodiment is a rear surface of the housing 110. In this embodiment, the support surface 112 is a curved surface and is in the shape of a half cylinder; however, the support surface could be curved in any alternative configuration such as spherical, oval, or any symmetrical or non-symmetrical curved surface (e.g., when viewed along one or more of a transverse cross-section (see FIG. 1B) or a longitudinal cross-section, the curved support surface can be semi-circular, semi-elliptical, semi-oval, parabolic, etc.). The support surface 112 is a surface of the housing upon which the communication device 100 is typically rested when the communication device 100 is placed upon a supporting surface, such as planar supporting surface 10 shown in FIGS. 1B-1D. As mentioned above, the curved support surface 112 is in the shape of a half cylinder, and thus the housing 110 of the communication device 100 can roll or pivot about an imaginary axis when the housing 110 is supported by a supporting surface 10 and a force is applied to the housing 110 (e.g., a force that changes a center of gravity of the communication device or a force that is applied to the communication device at an offset location from the center of gravity of the communication device).

The communication device includes a motive device is configured to move a weight housed within the housing in response to a receipt of a signal, as will be described in greater detail below, in order to cause the curved support surface of the housing to roll on the surface 10 supporting the communication device. The motive device, weight, and curved support surface can be formed in many different configurations in order to provide the communication device with many different movement configurations using many different structures. For example, the weight can be a battery of the communication device or any other weighted component thereof, a fluid material, etc., and the motive device used to move the weight can be any variation of motor, pump/value configuration (e.g., to move a fluid material), magnetic or electromagnetic device, gyroscopic device, etc.

In the embodiment depicted in FIGS. 1B-1D, the communication device 100 includes an electric motor 120 as the motive device, and a weight 130, such as the battery of the communication device 100. The weight 130 of the communication device 100 is supported on a track 140 using a support member 132 that is slidably received by the track 140 along transverse directions as shown in FIGS. 1B-1D. Such a track can incorporate ball-bearings in order to reduce friction. The electric motor 120 is connected to a drive shaft 122 that the electric motor can drive in rotation in a clockwise and counterclockwise direction about an axis of the drive shaft 122. The weight 130 is connected to the drive shaft 122 and the rotation of the drive shaft 122 moves the weight 130 along the track 140. For example, the drive shaft 122 can be threaded and threadedly engaged to a threaded hole on the weight 130, such that, for example, clockwise rotation of the drive shaft 122 drives the weight 130 to the right in FIG. 1B and counterclockwise rotation of the drive shaft 122 drives the weight 130 to the left in FIG. 1B. This configuration can be used to change the center of gravity of the communication device 100, thus causing the housing 110 to roll along the curved support surface 112 on the supporting surface 10.

Thus, the communication device 100 can be constructed in a manner such that the depiction in FIG. 1B is a typical rest position, where the housing 110 is rested upon the planar supporting surface 10 and the communication device 100 is generally balanced on a center of the curved support surface 112 with an upper face including the display 102 and keyboard 104, for example, being in a generally horizontal configuration. Of course, the communication device 100 can be constructed to have some other rest position, for example, the position shown in FIG. 1C or FIG. 1D, etc.; however, for the ease of description, the depiction in FIG. 1B will be considered the rest position in this embodiment. Thus, in the rest position, such an orientation will indicate to a user that no unacknowledged or unanswered calls, messages, texts, emails, etc. (referred to herein generically as a signal or signal event) have been or are presently being received by the communication device 100. However, when the communication device 100 moves to another orientation, such as the orientations in FIGS. 1C or 1D, then such movement or orientation change will act as an indicator to the user that such a signal event has occurred or is presently occurring. Thus, upon receipt of a telephone call, rather than actuating a ringtone or a vibration device, the communication device changes the orientation of the housing in response to the receipt of a signal in order to provide a user with an indicator of such receipt.

Accordingly, FIG. 1B depicts a default or rest position/orientation of the communication device 100 provided on a supporting surface 10, where the upper face of the communication device is generally horizontal and parallel to the supporting surface 10. FIG. 1C depicts a second position/orientation, where the upper face is tilted to an angle 12 with respect to the supporting surface 10 or with respect to a horizontal plane. Furthermore, FIG. 1D depicts a third position/orientation, where the upper face is tilted to an angle 14 with respect to the supporting surface 10 or with respect to a horizontal plane, and where angle 14 is greater than angle 12. Thus, the second position/orientation could be designated to represent a first signal receipt event (e.g., receipt of a telephone call, or receipt of a text message, etc.), and the third position/orientation could be designated to represent a second signal receipt event (e.g., receipt of a voicemail message, or receipt of an email message, etc.). Additional position/orientations/movements can be provided to designate additional signal receipt events. Various series/patterns of movements can be used to designate signal events (e.g., with a certain direction of movement, or with a certain length or amplitude or angle of movement, or with a certain speed or frequency of movement, etc.).

In order to achieve the movement from the rest position/orientation depicted in FIG. 1B to the second position/orientation depicted in FIG. 1C, the motor 120 rotates the drive shaft 122 to move the weight 130 along track 140 in a leftward direction, thereby shifting the center of gravity of the communication device 100 leftward and causing the housing 110 to roll leftward along the curved support surface 112. Similarly, in order to achieve the movement from the second position/orientation depicted in FIG. 1C to the third position/orientation depicted in FIG. 1D, the motor 120 further rotates the drive shaft 122 to move the weight 130 along track 140 in a leftward direction. Once the signal receipt event is acted upon by the user or other completion of the event, the motor 120 can reverse the direction of rotation of the drive shaft 122 to return the weight 130 rightward to the position in FIG. 1B, thus returning the communication device 100 to the rest position/orientation. Alternatively, upon occurrence of a signal receipt event, the motor 120 can be controlled to perform a series of repeated movements or a pattern of movements that would provide movement indicia for the user of the occurrence of the signal receipt event.

FIG. 2 is a block diagram of communication device components used for implementing the embodiment of the communication device 100 illustrated in FIGS. 1A-1D. A controller (e.g., processor) 200 is coupled to the display 102, the keyboard (e.g., keypad(s), touchscreen, or other user input device(s)) 104, and a memory 210 in any well-known telephone configuration, for example. The controller 200 is connected to a signal receiver/transmitter 206 that receives communication signals from and sends communication signals to other telephones or communication devices directly or via a wireless or wired communication network (e.g., cellular communication network, voice over internet protocol network, public switched telephone network, short or multimedia messaging system networks, radio transmission/receiver system, etc.). The controller 200 is connected to, and receives input from a user using the microphone 106 and provides output to the user using the speaker 108 via an audio interface 208.

The controller 200 is additionally coupled to a motion/orientation detector 202, an input sensor 204, and the motive device (e.g., motor) 120. The motion/orientation detector 202 is configured to sense the motion of the communication device 100 and is preferably configured to sense the orientation of the communication device at any given instant. For example, the motion/orientation detector 202 can include one or more of an angular and/or linear accelerometer, a gyroscope, or any other device capable of performing such functions. The motion/orientation sensor 202 can also be configured to shut off the orientation indication feature of the communication device if the device is in a certain orientation. For example, if the communication device is resting on the face of the housing rather than the curved support surface, or in some other orientation at which the orientation indication feature is not desired to be used, then the controller 200 could temporarily disable this feature until the communication device is moved out of such an orientation by the user. Also, motion/orientation sensor 202 can also be configured to shut off the orientation indication feature of the communication device until the communication device has been in a state of non-movement for some predetermined period of time (e.g., 10 seconds, 30 seconds, etc.) in order to reduce the change the feature will be activated when the device is being carried by the user. In such a situation, the controller 200 could default to some other form of indication, such as a ringtone or vibration indicator.

The input sensor 204 is configured to sense input from a user in one of a variety of different ways. For example, the input sensor 204 can include one or more of an angular and/or linear accelerometer (and can be integrated with such a device used as the detector 202), a gyroscope (and can be integrated with such a device used as the detector 202), an input key/button/touchscreen, or even a proximity sensor that senses the proximity of a user's hand or finger to a portion of the communication device. If an accelerometer and/or gyroscope are used as the input 204, then these devices can be used to sense movement of the communication device, and distinguish predicted movements caused by the motor 120 from movements caused by external sources in order to determine external user input. Thus, the user can act in response to initiation of a signal receipt event by touching the communication device. Thus, for example, if upon occurrence of a signal receipt event (e.g., incoming call) the communication device 100 changes orientation from that shown in FIG. 1B to that shown in FIG. 1D, then the user could respond to such event by pushing the communication device to the orientation in FIG. 1C to answer the incoming call, or pushing the communication device to the orientation in FIG. 1B to send the caller to a voicemail system. If errors occur in the sensing of the user input, for example, due to unintended external input (e.g., if the communication device is moved by a force other than applied by the user), then the user can input corrective instructions using the keyboard or other user input device.

The controller 200 and memory 210 can be used to create and store various user preferences or settings that define the orientation indicators performed by the communication device 100 upon occurrence of a signal receipt event, and/or can simply store and perform orientation indicators based on default settings. For example, the user can set the specific orientation the communication device 100 takes upon receipt of an incoming call, or an incoming text message, or upon receipt of a voicemail message, or upon receipt of an incoming call/message/text from a specific source (e.g., from a specific phone number of a specific person, email address, etc.). Thus, the various different positions or series/patterns of positions/movements can be user designated to represent one or more of an incoming voice and/or video communication, an incoming communication from a short messaging system, an incoming communication from a multimedia messaging system, a missed voice and/or video communication, a voice and/or video mail message, a communication from a particular source, etc. For example, the user can select a preset orientation or pattern for a specific event, or can construct a new pattern from various preset orientations to define a user defined sequence of movements. Such user defined or default settings can be stored in the memory 210 and used by the controller 200 upon receipt of a signal receipt event via the signal receiver transmitter 206 to control the motor 120 to perform the corresponding orientation indicator.

FIG. 3 depicts an additional embodiment of a communication device 300 that performs orientation indicators upon occurrence of a signal receipt event. The communication device 300 is in a configuration, for example, of a telephone or videophone that can be used as a desk or table phone. The communication device 300 includes an upper portion 302 that is generally vertically oriented in a rest position/orientation and includes a display, keyboard, microphone, and speaker. The upper portion 302 is attached to a base portion 304 that includes a curved support surface 306 that is similar to the curved support surface 112. The upper portion 302 and/or base portion 304 can be provided with a weight and motive device that shifts the center of gravity of the communication device 300 in response to a signal receipt event in order to change the orientation of the communication device 300 to provide an orientation indicator of the event. Thus, for example, the communication device 300 can rock backwards and/or forwards (as shown by the arrows) once or in a series/pattern of movements at one or more angles in order to provide various unique orientation indicators for various types of signal receipt events.

FIGS. 4A-4C depict a further embodiment of a communication device 400 that performs orientation indicators upon occurrence of a signal receipt event. The communication device 400 is in a configuration of a telephone. The communication device 400 includes a housing 402 with an upper face 404 that is generally horizontally oriented in a rest position/orientation and includes a display, keyboard, microphone, and speaker. The housing 402 includes a curved support surface 406 that has a generally semi-circular cross-section when taken along a vertical, transverse plane (e.g., extending through axis 407 in FIG. 4B) and generally semi-elliptical in cross-section when taken along a vertical, longitudinal plane (e.g., extending through axis 408 in FIG. 4B). The housing 402 houses a weight(s) and motive device(s) that shifts the center of gravity of the communication device 400 in response to a signal receipt event in order to change the orientation of the communication device 400 to provide an orientation indicator of the event. As will be described in greater detail below, the communication device 400 preferably includes a weight and motive devices that can rock the communication device 400 about axis 407, about axis 408, and any combination thereof in order to provide various unique orientation.indicators for various types of signal receipt events.

FIG. 4C depicts a plan view of the communication device 400 with the upper face 404 removed to reveal inner components. In the embodiment depicted in FIG. 4C, the communication device 400 includes a weight 410, such as a battery, other component, or a simple weight, a first electric motor 424 as a first motive device, and a second electric motor 430 as a second motive device. The weight 410 is slidably supported on a plate member 420 such that the weight 410 can slide along or parallel to axis 408 upon the plate member 420 using first motor 424, and the plate member 420 is slidably supported on the housing 402 such that the plate member 420 (and the weight 410 thereon) can slide along or parallel to axis 407 using the second motor 430.

The weight 410 of the communication device 400 is supported on a track 422 on plate member 420 using support members 412 and 414 that are slidably received by the track 422 along or parallel to axis 408 (see FIG. 4B). The electric motor 424 is connected to a drive shaft 426 that the electric motor can extend and retract. The weight 410 is connected to the drive shaft 426 and the extension and retraction of the drive shaft 426 moves the weight 410 along the track 422. This configuration can be used to change the center of gravity of the communication device 400 about the axis 407, thus causing the housing 402 to roll along the curved support surface 406 on the supporting surface 10 as shown by the double-headed arrow in FIG. 4A.

Additionally, the plate member 420 (and weight 410 thereon) is supported on a pair of parallel tracks 436 and 438, which are attached to the housing 402. The plate member 420 is attached to the tracks 436 and 438 using support members 428 and 429 that are slidably received by the tracks 436 and 438 along or parallel to axis 407 (see FIG. 4B). The electric motor 430 is connected to a drive shaft 432 that the electric motor can drive in rotation in a clockwise and counterclockwise direction about an axis of the drive shaft 432. The plate member 420 is connected to the drive shaft 432 via member 434 and the rotation of the drive shaft 432 moves the plate member 420 along the tracks 436 and 438. This configuration can be used to change the center of gravity of the communication device 400 about the axis 408, thus causing the housing 402 to roll along the curved support surface 406 on the supporting surface 10 in a manner similar to that depicted in FIGS. 1B-1D. The combined movements about axes 407 and 408 using motors 424 and 430 can produce a wide variety of different movements. For example, by simultaneously controlling the movement of the motors 424 and 430, the communication device 400 could be caused to roll in a circular or elliptical manner about an axis perpendicular to both axes 407 and 408. Numerous other complex rolling movements are possible using such a configuration.

As is apparent from the above description, numerous different housing shapes and motive device/weight configurations are contemplated by the present disclosure to provide a wide variety of orientation movements.

FIGS. 5A-5C depict another embodiment of a communication device 500 that performs orientation indicators upon occurrence of a signal receipt event. In the embodiment, the communication device 500 is in the form of a flip-phone, although other embodiments can include any device configuration that includes moveably connected portions.

The communication device 500 has a housing that includes a first portion 502 (e.g., a base portion containing a microphone and keyboard/keypad) movably connected to a second portion 504 (e.g., a portion containing a speaker and display). In this embodiment, the first portion 502 is pivotally connected to the second portion 504 by a pivot joint 506. Furthermore, in this embodiment, a motive device 508 is provided in the pivot joint 506 and is configured to move the second portion 504 with respect to the first portion 502. For example, the motive device can be an electric motor that drives a drive shaft in rotation, where the drive shaft is connected to the second portion 504 to cause the second portion 504 to pivot and change positional relationship with respect to the first portion 502.

Accordingly, FIG. 5A can be considered to depict a default or rest position/orientation of the communication device 500 whereby the first portion 502 is abutting the second portion 504. FIG. 5BC depicts a second position/orientation, where the second portion 504 is pivoted to an angle 510 with respect to the first portion 502. Furthermore, FIG. 5C depicts a third position/orientation, where the second portion 504 is pivoted to an angle 512 with respect to the first portion 502. Thus, the second position/orientation could be designated to represent a first signal receipt event (e.g., receipt of a telephone call, or receipt of a text message, etc.), and the third position/orientation could be designated to represent a second signal receipt event (e.g., receipt of a voicemail message, or receipt of an email message, etc.). Additional position/orientations can be provided to designate additional signal receipt events. Also, various series of changes in position/orientation can be used to designate various signal receipt events.

The various orientation indicators contemplated herein can also be combined with other indicators, such as noise or visual display indicators if so desired. For example, the communication device could be controlled to perform a certain series of movements (e.g., to replicate a dance) that is performed in synchronization with the playing of a musical-ringtone and/or with the displaying of a picture or video on the display of the device.

It should be noted that the exemplary embodiments depicted and described herein set forth the preferred embodiments of the present invention, and are not meant to limit the scope of the claims hereto in any way. Numerous modifications and variations of the present invention are possible in light of the above teachings. It is therefore to be understood that, within the scope of the appended claims, the invention may be practiced otherwise than as specifically described herein.

## Claims

1. A communication device (100) comprising:
a housing (110);
a signal receiver configured to receive a signal from another communication device; and
a first motive device (120) provided within the housing and configured to change an orientation of the housing in response to the receipt of the signal,
wherein the housin includes a curved support surface (112), and wherein the first motive device is configured to move a weight (130) housed within the housing along a first linear track (140) in response to the receipt of the signal in order to cause the curved support surface of the housing to roll on a surface supporting the communication device in a first direction.

2. The communication device of claim 1, wherein the curved support surface has a cross-section that is semi-circular and/or a cross-section that is semi-elliptical.

3. The communication device of claim 1 or 2, further comprising:
a second motive device configured to move the weight along a second linear track to cause the curved support surface of the housing to roll on the surface supporting the communication device in a second direction that is different than the first direction.

4. The communication device of any one of claims 1 - 3, wherein the first motive device is configured to move the weight along the first linear track from a first position to one of a plurality of different second positions, and wherein the different second positions are designated to represent one or more of an incoming voice and/or video communication, an incoming communication from a short messaging system, an incoming communication from a multimedia messaging system, a missed voice and/or video communication, a voice and/or video mail message, and a communication from a particular source.

5. The communication device of any one of claims 1 - 4, wherein the first motive device is configured to change an orientation of the housing plural times in a predetermined pattern in response to the receipt of the signal.

6. The communication device according to any one of claims 1 - 5, wherein the first motive device is configured to change the orientation of the housing plural times in a plurality of different predetermined patterns, and wherein the different predetermined patterns are designated to represent one or more of an incoming voice and/or video communication, an incoming communication from a short messaging system, an incoming communication from a multimedia messaging system, a missed voice and/or video communication, a voice and/or video mail message, and a communication from a particular source.

7. The communication device of any one of claims 1 - 6, further comprising an input sensor configured to sense a change in orientation of the housing based upon a user input in response to the change in orientation of the housing in response to the receipt of the signal.

8. A method of processing receipt of a signal at a communication device, said method comprising:
changing an orientation of a housing of the communication device in response to the receipt of the signal using at least one motive device housed within the housing,
wherein the changing of the orientation of the housing includes using the at least one motive device to move the weight along plural axes, and
wherein the housing includes a curved support surface, and wherein the changing of the orientation of the housing includes using a first motive device of the at least one motive device to move a weight housed within the housing along a first linear track in response to the receipt of the signal in order to cause the curved support surface of the housing to roll on a surface supporting the communication device along a first axis of the plural axes.

9. The method of claim 8, wherein the changing of the orientation of the housing includes using a second motive device of the at least one motive device to move the weight housed within the housing along a second linear track in response to the receipt of the signal in order to cause the curved support surface of the housing to roll on a surface supporting the communication device along a second axis of the plural axes, where the second axis is different than the first axis.

10. The method of claim 8 or 9, wherein the curved support surface has a cross-section that is semi-circular and/or a cross-section that is semi-elliptical.

11. The method of any one of claims 8 - 10, wherein the first motive device is configured to move the weight from a first position to one of a plurality of different second positions, and wherein the different second positions are designated to represent one or more of an incoming voice and/or video communication, an incoming communication from a short messaging system, an incoming communication from a multimedia messaging system, a missed voice and/or video communication, a voice and/or video mail message, and a communication from a particular source.

12. The method of any one of claims 8 - 11, further comprising changing the orientation of the housing of the communication device plural times in a predetermined pattern in response to the receipt of the signal.

13. The method of claim 12, wherein the first motive device is configured to change the orientation of the housing plural times in a plurality of different predetermined patterns, and wherein the different predetermined patterns are designated to represent one or more of an incoming voice and/or video communication, an incoming communication from a short messaging system, an incoming communication from a multimedia messaging system, a missed voice and/or video communication, a voice and/or video mail message, and a communication from a particular source.

14. The method of any one of claims 8 - 13, further comprising sensing a change in orientation of the housing based upon a user input in response to the change in orientation of the housing in response to the receipt of the signal.

## Patentansprüche

1. Kommunikationsvorrichtung (100) mit:
einem Gehäuse (110),
einem Signalempfänger, der eingerichtet ist, ein Signal von einer weiteren Kommunikationsvorrichtung zu empfangen, und
einer ersten Antriebsvorrichtung (120), die in dem Gehäuse vorgesehen und eingerichtet ist, eine Ausrichtung des Gehäuses in Reaktion auf den Empfang des Signals zu verändern,
wobei das Gehäuse eine gewölbte Auflagefläche (112) aufweist und wobei die erste Antriebsvorrichtung eingerichtet ist, in Reaktion auf den Empfang des Signals ein Gewicht (130), das in dem Gehäuse untergebracht ist, entlang einer ersten geradlinigen Bahn (140) zu bewegen, um zu bewirken, dass die gewölbte Auflagefläche des Gehäuses auf einer Fläche, welche die Kommunikationsvorrichtung trägt, in einer ersten Richtung abrollt.

2. Kommunikationsvorrichtung nach Anspruch 1, wobei die gewölbte Auflagefläche einen Querschnitt, der halbkreisförmig ist, und/oder einen Querschnitt, der halbelliptisch ist, aufweist.

3. Kommunikationsvorrichtung nach Anspruch 1 oder 2, ferner mit:
einer zweiten Antriebsvorrichtung, die eingerichtet ist, das Gewicht entlang einer zweiten geradlinigen Bahn zu bewegen, um zu bewirken, dass die gewölbte Auflagefläche des Gehäuses auf der Fläche, welche die Kommunikationsvorrichtung trägt, in einer zweiten Richtung abrollt, die sich von der ersten Richtung unterscheidet.

4. Kommunikationsvorrichtung nach einem der Ansprüche 1-3, wobei die erste Antriebsvorrichtung eingerichtet ist, das Gewicht entlang der ersten geradlinigen Bahn von einer ersten Lage in eine von mehreren unterschiedlichen zweiten Lagen zu bewegen, und wobei die unterschiedlichen zweiten Lagen dazu bestimmt sind, eine oder mehrere von einer einlaufenden Sprach- und/oder Videoübertragung, einer einlaufenden Übertragung von einem Kurznachrichten-Übermittlungssystem, einer einlaufenden Übertragung von einem Multimedia-Nachrichtenübermittlungssystem, einer Sprach- und/oder Video-Fehlübertragung, einer Sprach- und/oder Video-Mail-Nachricht und einer Übertragung von einer speziellen Quelle zu repräsentieren.

5. Kommunikationsvorrichtung nach einem der Ansprüche 1-4, wobei die erste Antriebsvorrichtung eingerichtet ist, eine Ausrichtung des Gehäuses mehrere Male nach einem vorgegebenen Muster in Reaktion auf den Empfang des Signals zu verändern.

6. Kommunikationsvorrichtung nach einem der Ansprüche 1-5, wobei die erste Antriebsvorrichtung eingerichtet ist, die Ausrichtung des Gehäuses mehrere Male nach mehreren unterschiedlichen vorgegebenen Mustern zu verändern, und wobei die unterschiedlichen vorgegebenen Muster dazu bestimmt sind, eine oder mehrere von einer einlaufenden Sprach- und/oder Videoübertragung, einer einlaufenden Übertragung von einem Kurznachrichten-Übermittlungssystem, einer einlaufenden Übertragung von einem Multimedia-Nachrichtenübermittlungssystem, einer Sprach- und/oder Video-Fehlübertragung, einer Sprach- und/oder Video-Mail-Nachricht und einer Übertragung von einer speziellen Quelle zu repräsentieren.

7. Kommunikationsvorrichtung nach einem der Ansprüche 1-6, ferner mit einem Eingangssensor, der eingerichtet ist, eine Veränderung in der Ausrichtung des Gehäuses zu erfassen, die auf einer Nutzereingabe in Reaktion auf die Veränderung in der Ausrichtung des Gehäuses in Reaktion auf den Empfang des Signals basiert.

8. Verfahren zur Verarbeitung des Empfangs eines Signals an einer Kommunikationsvorrichtung, wobei das Verfahren umfasst:
Verändern einer Ausrichtung eines Gehäuses der Kommunikationseinrichtung in Reaktion auf den Empfang des Signals unter Verwendung mindestens einer Antriebsvorrichtung, die in dem Gehäuse untergebracht ist,
wobei das Verändern der Ausrichtung des Gehäuses die Verwendung der mindestens einen Antriebsvorrichtung einschließt, um das Gewicht entlang mehrerer Achsen zu bewegen, und
wobei das Gehäuse eine gewölbte Auflagefläche aufweist und wobei die Veränderung der Ausrichtung des Gehäuses die Verwendung einer ersten Antriebsvorrichtung von der mindestens einen Antriebsvorrichtung einschließt, um das Gewicht, das in dem Gehäuse untergebracht ist, in Reaktion auf den Empfang eines Signals entlang einer ersten geradlinigen Bahn zu bewegen, um zu bewirken, dass die gewölbte Auflagefläche des Gehäuses auf einer Fläche, welche die Kommunikationsvorrichtung trägt, entlang einer ersten Achse von den mehreren Achsen abrollt.

9. Verfahren nach Anspruch 8, wobei das Verändern der Ausrichtung des Gehäuses eine Verwendung einer zweiten Antriebsvorrichtung von der mindestens einen Antriebsvorrichtung einschließt, um das Gewicht, das in dem Gehäuse untergebracht ist, in Reaktion auf den Empfang eines Signals entlang einer zweiten geradlinigen Bahn zu bewegen, um zu bewirken, dass die gewölbte Auflagefläche des Gehäuses auf einer Fläche, welche die Kommunikationsvorrichtung trägt, entlang einer zweiten Achse von den mehreren Achsen abrollt, wobei sich die zweite Achse von der ersten Achse unterscheidet.

10. Verfahren nach Anspruch 8 oder 9, wobei die gewölbte Auflagefläche einen Querschnitt, der halbkreisförmig ist, und/oder einen Querschnitt, der halbelliptisch ist, aufweist.

11. Verfahren nach einem der Ansprüche 8-10, wobei die erste Antriebsvorrichtung eingerichtet ist, das Gewicht von einer ersten Lage in eine von mehreren unterschiedlichen zweiten Lagen zu bewegen, und wobei die unterschiedlichen zweiten Lagen dazu bestimmt sind, eine oder mehrere von einer einlaufenden Sprach- und/oder Videoübertragung, einer einlaufenden Übertragung von einem Kurznachrichten-Übermittlungssystem, einer einlaufenden Übertragung von einem Multimedia-Nachrichtenübermittlungssystem, einer Sprach- und/oder Video-Fehlübertragung, einer Sprach- und/oder Video-Mail-Nachricht und einer Übertragung von einer speziellen Quelle zu repräsentieren.

12. Verfahren nach einem der Ansprüche 8-11, ferner umfassend, dass die Ausrichtung des Gehäuses mehrere Male nach einem vorgegebenen Muster in Reaktion auf den Empfang des Signals verändert wird.

13. Verfahren nach Anspruch 12, wobei die erste Antriebsvorrichtung eingerichtet ist, die Ausrichtung des Gehäuses mehrere Male nach mehreren unterschiedlichen vorgegebenen Mustern zu verändern, und wobei die unterschiedlichen vorgegebenen Muster dazu bestimmt sind, eine oder mehrere von einer einlaufenden Sprach- und/oder Videoübertragung, einer einlaufenden Übertragung von einem Kurznachrichten-Übermittlungssystem, einer einlaufenden Übertragung von einem Multimedia-Nachrichtenübermittlungssystem, einer Sprach- und/oder Video-Fehlübertragung, einer Sprach- und/oder Video-Mail-Nachricht und einer Übertragung von einer speziellen Quelle zu repräsentieren.

14. Verfahren nach einem der Ansprüche 8-13, ferner umfassend, dass eine Veränderung in der Ausrichtung des Gehäuses erfasst wird, die auf einer Nutzereingabe in Reaktion auf die Veränderung in der Ausrichtung des Gehäuses in Reaktion auf den Empfang des Signals basiert.

## Revendications

1. Dispositif de communication (100) comprenant :
un boîtier (110) ;
un récepteur de signal configuré pour recevoir un signal d'un autre dispositif de communication ; et
un premier dispositif moteur (120) implanté dans le boîtier et configuré pour changer une orientation du boîtier en réponse à la réception du signal ;
dans lequel le boîtier comprend une surface d'appui courbe (112) et dans lequel le premier dispositif moteur est configuré pour déplacer un poids (130) situé dans le boîtier le long d'une première piste linéaire (140) en réponse à la réception du signal, afin de commander une rotation de la surface d'appui courbe du boîtier dans une première direction sur une surface qui supporte le dispositif de communication.

2. Dispositif de communication selon la revendication 1, dans lequel la surface d'appui courbe a une section transversale semi-circulaire et/ou une section transversale semi-elliptique.

3. Dispositif de communication selon la revendication 1 ou 2, comprenant en outre :
un second dispositif moteur configuré pour déplacer le poids le long d'une seconde piste linéaire afin de commander une rotation de la surface d'appui courbe du boîtier dans une seconde direction, différente de la première direction, sur la surface qui supporte le dispositif de communication.

4. Dispositif de communication selon l'une quelconque des revendications 1 à 3, dans lequel le premier dispositif moteur est configuré pour déplacer le poids le long de la première piste linéaire entre une première position et une position parmi une pluralité de différentes secondes positions et dans lequel les différentes secondes positions sont conçues pour représenter un ou plusieurs des éléments suivants : une communication vocale et/ou vidéo entrante, une communication entrante provenant d'un système de messages courts, une communication entrante provenant d'un système de messagerie multimédia, une communication vocale et/ou vidéo manquée, un message de messagerie vocale et/ou vidéo et une communication provenant d'une source particulière.

5. Dispositif de communication selon l'une quelconque des revendications 1 à 4, dans lequel le premier dispositif moteur est configuré pour changer une orientation du boîtier plusieurs fois, selon un schéma prédéterminé, en réponse à la réception du signal.

6. Dispositif de communication selon l'une quelconque des revendications 1 à 5, dans lequel le premier dispositif moteur est configuré pour changer une orientation du boîtier plusieurs fois, selon une pluralité de différents schémas prédéterminés, et dans lequel les différents schémas prédéterminés sont conçus pour représenter un ou plusieurs des éléments suivants : une communication vocale et/ou vidéo entrante, une communication entrante provenant d'un système de messages courts, une communication entrante provenant d'un système de messagerie multimédia, une communication vocale et/ou vidéo manquée, un message de messagerie vocale et/ou vidéo et une communication provenant d'une source particulière.

7. Dispositif de communication selon l'une quelconque des revendications 1 à 6, comprenant en outre un capteur d'entrée configuré pour détecter un changement de l'orientation du boîtier en fonction d'une entrée de l'utilisateur en réponse au changement d'orientation du boîtier en réponse à la réception du signal.

8. Procédé de traitement de la réception d'un signal sur un dispositif de communication, ledit procédé comprenant l'étape consistant à :
changer une orientation d'un boîtier du dispositif de communication en réponse à la réception du signal, à l'aide d'au moins un dispositif moteur situé dans le boîtier ;
dans lequel l'étape de changement d'orientation du boîtier comprend l'étape consistant à utiliser ledit au moins un dispositif moteur pour déplacer le poids selon plusieurs axes ; et
dans lequel le boîtier comprend une surface d'appui courbe et dans lequel l'étape de changement de l'orientation du boîtier comprend l'étape consistant à utiliser un premier dispositif moteur pour déplacer un poids situé dans le boîtier le long d'une première piste linéaire en réponse à la réception du signal, afin de commander une rotation de la surface d'appui courbe du boîtier le long d'un premier axe sur la pluralité d'axes, sur une surface qui supporte le dispositif de communication.

9. Procédé selon la revendication 8, dans lequel l'étape de changement de l'orientation du boîtier comprend l'étape consistant à utiliser un second dispositif moteur parmi ledit au moins un dispositif moteur pour déplacer le poids situé dans le boîtier selon une seconde piste linéaire en réponse à la réception du signal, afin de commander la rotation de la surface d'appui courbe du boîtier le long d'un second axe parmi la pluralité d'axes, le second axe étant différent du premier axe, sur une surface qui supporte le dispositif de communication.

10. Procédé selon la revendication 8 ou 9, dans lequel la surface d'appui courbe a une section transversale semi-circulaire et/ou une section transversale semi-elliptique.

11. Procédé selon l'une quelconque des revendications 8 à 10, dans lequel le premier dispositif moteur est configuré pour déplacer le poids entre une première position et une position parmi une pluralité de différentes secondes positions et dans lequel les différentes secondes positions sont conçues pour représenter un ou plusieurs des éléments suivants : une communication vocale et/ou vidéo entrante, une communication entrante provenant d'un système de messages courts, une communication entrante provenant d'un système de messagerie multimédia, une communication vocale et/ou vidéo manquée, un message de messagerie vocale et/ou vidéo et une communication provenant d'une source particulière.

12. Procédé selon l'une quelconque des revendications 8 à 11, comprenant en outre l'étape consistant à changer l'orientation du boîtier du dispositif de communication plusieurs fois, selon un schéma prédéterminé, en réponse à la réception du signal.

13. Procédé selon la revendication 12, dans lequel le premier dispositif moteur est configuré pour changer l'orientation du boîtier plusieurs fois, selon une pluralité de différents schémas prédéterminés et dans lequel les différents schémas prédéterminés sont conçus pour représenter un ou plusieurs des éléments suivants : une communication vocale et/ou vidéo entrante, une communication entrante provenant d'un système de messages courts, une communication entrante provenant d'un système de messagerie multimédia, une communication vocale et/ou vidéo manquée, un message de messagerie vocale et/ou vidéo et une communication provenant d'une source particulière.

14. Procédé selon l'une quelconque des revendications 8 à 13, comprenant en outre l'étape consistant à détecter un changement de l'orientation du boîtier en fonction d'une entrée de l'utilisateur en réponse au changement d'orientation du boîtier en réponse à la réception du signal.
